Europäisches Patentamt

European Patent Office

Office européen des brevets

(11) Publication number: **0 393 461**
**A2**

## EUROPEAN PATENT APPLICATION

(21) Application number: **90106769.4**

(22) Date of filing: **09.04.90**

(51) Int. Cl.⁵: **G21B 1/00**

(30) Priority: **20.04.89 JP 103095/89**

(43) Date of publication of application:
**24.10.90 Bulletin 90/43**

(84) Designated Contracting States:
**DE FR GB**

(71) Applicant: **SEMICONDUCTOR ENERGY
LABORATORY CO., LTD.**
**398 Hase**
**Atsugi-shi Kanagawa-ken, 243(JP)**

(72) Inventor: **Yamazaki, Shunpei**
**21-21, Kitakarasuyama, 7-chome**
**Setagaya-ku, Tokyo 157(JP)**

Inventor: **Miyanaga, Akigaru**
**Coop Denen 2-6, 1-5-5, Nagao, Tama-ku**
**Kawasaki-shi, Kanagawa-ken, 214(JP)**
Inventor: **Wakaizumi, Kazuhiro**
**Flat SEL 307, 304-1, Hase**
**Atsugi-shi, Kanawaga-ken, 243(JP)**
Inventor: **Takemura, Yasuhiko**
**Flat Atsugi 208, 931-1, Hase,**
**Atsugi-shi, Kanagawa-ken 243(JP)**

(74) Representative: **Patentanwälte Grünecker,**
**Kinkeldey, Stockmair & Partner**
**Maximilianstrasse 58**
**D-8000 München 22(DE)**

(54) **Plasma nuclear fusion method.**

(57) A method of attaining improved reliability in the implementation of a nuclear fusion reaction using a highly pure deuterium gas and causing the nuclear fusion reaction at an area different from the area where the deuterium gas is made into plasma.

F I G . 1

## BACKGROUND OF THE INVENTION

Field of the Invention

The present invention relates to attaining improved reliability in the implementation of a nuclear fusion reactions and specifically to a method of using microwaves in a magnetic field for the nuclear fusion reaction in the plasma chemical vapor reaction system and controlling the extent of that nuclear fusion reaction.

Description of the Prior Art

A nuclear fusion reaction by electrochemical process, which is referred to as cold nuclear fusion, has been attained and reported by S.E. Jones et al. The paper is entitled "Observation of Cold Nuclear Fusion in Condensed Matter" and was authored by S.E. Jones, E.P. Palmer, J.B. Crirr, D.L. Decler, G.L. Jensen, J.M. Thorne, S.F. Taylor, (all of Brigham Young University), and J. Rafelski (University of Arizona).

In this reaction, a pair of electrodes comprising a palladium or titanium cathode and a gold or platinum anode are inserted into a solution containing heavy water, and a DC voltage is applied across these electrodes. In addition, the electrochemical nuclear fusion reaction is carried out at an atmospheric pressure.

Because of the fact that this reaction is carried out in a solusion in a normal environment, there is little possibility that deuterium (D) atoms combine with other deuterium atoms to produce the nuclear fusion.

Nuclei of deuterium are created at a portion of the cathode and simultaneously the fusion reaction of deuterium nuclei are caused at the same portion.

Also, since a solusion is used, palladium which is used as a catalyst for combining the deuterium atoms is easily poisoned to be coated with a poisoned film of inactive substance whereby the extent of catalyst reactivity is deteriorated, and it is difficult to break down the poisoned film to produce a uniform nuclear fusion. For this reason, there is a high degree of variation and a lack of reproducibility in the nuclear fusion reaction.

In addition, because of the occurrence of electrochemical side reactions which takes place simultaneously with the nuclear fusion, most of the products of the reaction decompose and the deuterium is eventually released into the atmosphere. As a result, the amount of deuterium actually used in the nuclear fusion reaction is considerably less than expected. Therefore, a method of reliably controlling the nuclear fusion reaction with a high probability of nuclear fusion occurring is further required.

## SUMMARY OF THE INVENTION

An object of the present invention is to provide, with due consideration to the drawbacks of such a prior art reaction system, a method of attaining improved reliability in the implementation of a nuclear fusion reaction using a highly pure deuterium gas.

Another object of the present invention is to provide a method of attaining improved reliability in the implementation of a nuclear fusion reaction causing the nuclear fusion reaction at an area different from the area where the deuterium gas is made into plasma.

## BRIEF DESCRIPTION OF THE DRAWINGS

Figure 1 is a schematic illustration showing one embodiment of the system for the plasma fusion reaction in the present invention.

Figure 2(A) is a graph showing a computer simulation of the characteristics of the magnetic field used in one embodiment of the present invention.

Figure 2(B) is a graph showing a computer simulation of the characteristics of the electric field used in one embodiment of the present invention.

Figure 3(A) is a graph showing the characteristics of the magnetic field under conditions of interaction of both the electric and magnetic fields used in one embodiment of the present invention.

Figure 3(B) is a graph showing the characteristics of the electric field under conditions of interaction of both the electric and magnetic fields used in one embodiment of the present invention.

Figure 4 is a graph showing the neutron count measured by the neutron counter used in one embodiment of the present invention.

## DETALED DESCRIPTION OF THE PREFERRED EMBODIMENTS

In the nuclear fusion reaction in the present invention, a solution used in the prior art nuclear fusion process is not used, but 98% pure or better deuterium gas is used with the remaining being made up of hydrogen ($H_2$) and 100 PPM or less of other matter.

The probability of generating nuclear fusion is further improved by separately providing an area where the deuterium gas is made into plasma and an area where the deuterium atoms or ions which have been made into plasma are attracted to a reactive material for nuclear fusion reaction in an attempt to cause nuclear fusion reaction thereon.

By doing so, the probability of generating nuclear fusion is increased and energy produced by the nuclear fusion fusion reaction is more efficiently let to go out of the reaction system with less energy escaping.

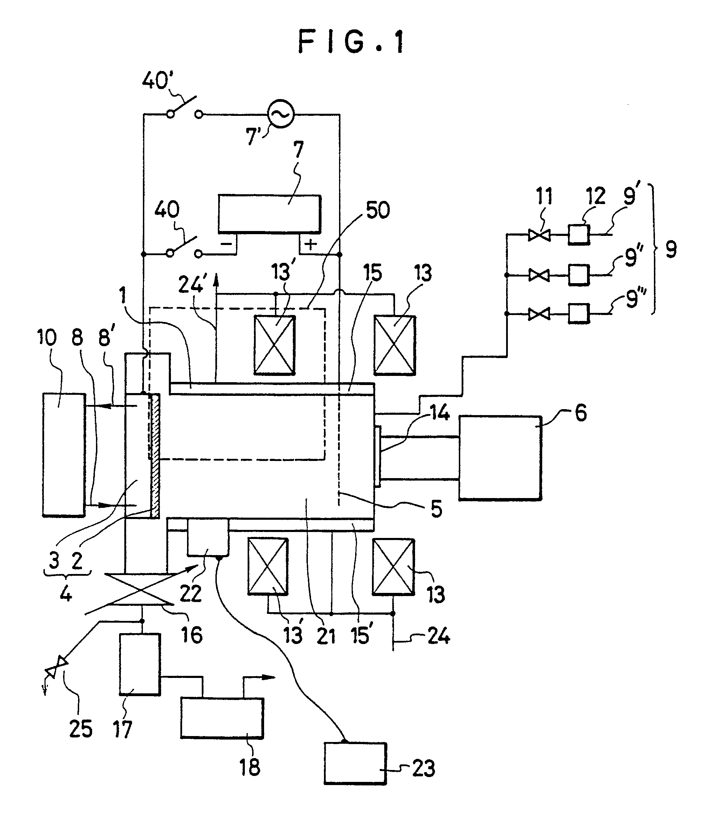

Figure 1 gives a description of the microwave and magnetic field equipment used in this invention to obtain plasma nuclear fusion.

According to the drawing, provided inside the nuclear fusion reaction vessel (1) is a reaction space or plasma generating space (21) capable of maintaining an atmospheric pressure or a reduced pressure where plasma is generated. A reactive material (2) for producing the nuclear fusion reaction thereon is located in the reaction vessel (1). Located behind the reactive material (2) used for producing the nuclear fusion reaction is a base (3) which contains a chamber for a heat transfer medium. The material (2) and the base (3) form an electrode (4). The heat transfer medium moves from the heat transfer vessel (10) along a path (8) into the base (3) and the heated medium returns along another path (8'). Donut-shaped Helmholtz type electromagnets (13) and (13') for producing resonance surround the reaction vessel (1). In order that the electromagnets (13) and (13') and the reaction vessel (1) do not get too hot, there are water chillers (15) and (15'). Water enters the chillers (15) and (15') by a path (24) and exit through another path (24'). Also there are an electrode (5), for example, a needle-like electrode, a microwave power supply (6), a power supply (7), a gas system (9), a quartz window (14) where the microwaves are supplied to the reaction space (21), a pressure regulator valve (16) on the exhaust line, a wide area turbo molecule pump (17), a rotary pump (18) and a neuterium counter (22) with a control system (23).

A valve (25) is provided for using atmospheric pressure in generating plasma. Specifically, when plasma is generated in the atmospheric pressure, the valve (25) is opened after the reaction has taken place, so that the gas is discharged into the atmosphere through the exhaust processor.

A bias voltage is applied from the power supply (7) between the electrode (4) and the electrode (5), so that there is a negative current or a negative pulse voltage being applied to the electrode (4). The reactive gases flow through the gas sysytem (9), Helium (He) by line (9'), Deuterium ($D_2$) by line (9'') and Hydrogen ($H_2$) by line (9'''). They pass through the flow meter (12) and valve (11) and then enter the reaction space (21).

In operation, the neutrons produced in the nuclear fusion reaction are released into the base (3) that is arranged to have a chamber behind the reactive material (2).

The neutron energy etc. is absorbed by a neutron energy absorbing medium in the chamber of the base (3), for example water ($H_2O$), and the energy is transformed into heat energy. By releasing this heat energy to the outside through the medium, the energy produced by the nuclear fusion reaction, especially the heat energy of the fusion reaction, becomes a simple energy source and can be used industrially. For example, it can be used for producing electricity or heating.

Deuterium gas ($D_2$) is put into a plasma reaction vessel where resonance of microwaves and magnetism is used to produce a high density plasma 10 - 1000 times more dense than that produced by using high frequency.

By applying electricity, the deuterium gas can then be made into plasma to obtain nuclear fusion. The deuterium ions in the plasma are attracted to the surface of the reactive material (for example palladium or titanium) which is made reactive for nuclear fusion by a negatively biased electric field provided from outside.

The deuterium nuclei (d) or the deuterium ions then collide with the surface of the cathode or the palladium electrode (2). The nuclear fusion reaction is obtained on and in the vicinity of this surface, for which an electric field is applied as a DC bias current from the external power supply (7) in such a way that the palladium side (2) becomes negatively biased.

The neutrons (n) are detected by the neutron counter (22) placed adjacent to the reaction vessel (1) for evidence of the cold nuclear fusion, specifically detecting the existence and amount of the neutrons produced there.

The neutrons (n) are detected by which the following nuclear fusion reaction can be expected as possible.

$$d + d \rightarrow {}^3He(0.82\ MeV) + n(2.45\ MeV)$$

At the same time the following reaction can also be expected.

$$d + d \rightarrow P(3.02\ MeV) + t(1.01\ MeV)$$

As a result of the nuclear fusion reaction, the neutrons collide the heat transfer medium (for example water) in the chamber located behind the palladium electrode (2) carrying an energy of 2.45 MeV producing a rise in temperature, by which an energy exchange as in the formula above is detected. The existence of the neutrons is detected using the neutron spectrometer (22).

The production of neutrons and also the rise in temperature of the medium increases proportionally as the pressure in the reaction vessel (1) is increased from 0.1 Torr to 7600 Torr and also as the applied electric energy is increased. Compared to the case of applying no external bias voltage, the nuclear fusion reaction on the palladium side is clearly promoted by increasing the voltage of the negatively biased current. In the present invention, the DC bias voltage can be increased from -100V to -1000V. Of course the voltage could have been increased more than this, but there is the danger of explosions; specifically, increasing the reaction efficiency too high will be followed by explosion.

It is important that when palladium is arranged on the surface of the electrode (2) in the plasma spcae (21), so that nuclear fusion is attempted there, the reaction is controlled so as not to advance too much. Therefore, although a sufficiently high voltage is applied enough for a reaction to take place, the nuclear fusion reaction is controlled so as not to exceed the critical value by applying the negative direct current bias in intervals or pulses.

Specifically, the voltage is applied at 1 to 1000 pulses per minute and the pulse width is also varied from 0.1% to 100%. The 100% pulse width means a continuous state, which is referred to as DC continuous voltage. As a result, in the case where DC continuous voltage is applied, the existence of nuclear fusion is observed even at as little as -200 V.

In the case where a DC pulsed voltage is applied, with a sufficiently high voltage, for example, -300 to -1000 V, and especially, for example, at -500V, and also with a duty ratio of 50% and a frequency of 30 times per minute, it is possible to suppress or control the extent of the nuclear fusion. Here, the term "duty ratio of 50%" means that voltage is applied for 50% of a single cycle with no voltage applied for the other 50% of the cycle.

The present invention will be more clearly understood by reading the following examples.

EXAMPLE 1

According to Figure 1, the reaction space (21) in the nuclear fusion reaction vessel (1) was maintained at a predetermined pressure so that plasma was generated. The reactive material (2) for producing the nuclear fusion reaction thereon was located in the reaction vessel (1). A heat transfer medium was circulated through the base (3), behind the material (2), the path (8), the heat transfer vessel (10) and the path (8').

The material (2) with the base (3) was made to cooperate with the electrode (5) to form an electrode system for nuclear fusion.

The donut-shaped Helmholtz type electromagnets (13) and (13') surrounding the reaction vessel (1) produced resonance, so that the magnetic field was produced by the Helmholtz coil method using the ring-shaped electromagnets (13) and (13'). The electromagnets (13) and (13') and the reaction vessel (1) were prevented from getting too hot by the water chillers (15) and (15').

When plasma was generated in atmospheric pressure, the valve (25) was opened after the react ion had taken place, so that the gas was discharged into the atmosphere through the exhaust processor.

A bias voltage was applied from the power supply (7) between the reactive material (2) and the electrode (5), so that there was a negative current or a negative pulse voltage being applied to the reactive material (2).

The reactive gases flowed through the gas lines (9), Helium (He) by line (9'), Deuterium ($D_2$) by line (9") and Hydrogen ($H_2$) by line (9"'). They passed through the flow meter (12) and valve (11) and then entered the reaction space (21).

As a negative DC voltage applied to the surface of the reactive material or palladium electrode (2) was increased, the neutron count of the reaction was increased, from which it was expected that the deuterium atoms or ions that had been turned to plasma combined with each other on the reactive material (2) according to the following nuclear fusion reactions:

$$d + d \longrightarrow {}^3He(0.82 \text{ MeV}) + n(2.45 \text{ MeV})$$
$$d + d \longrightarrow P(3.02 \text{ MeV}) + t(1.01 \text{ MeV})$$

The neutron count was performed by the counter (22) by way of the control system (23). It should be mentioned that this count is a relative value.

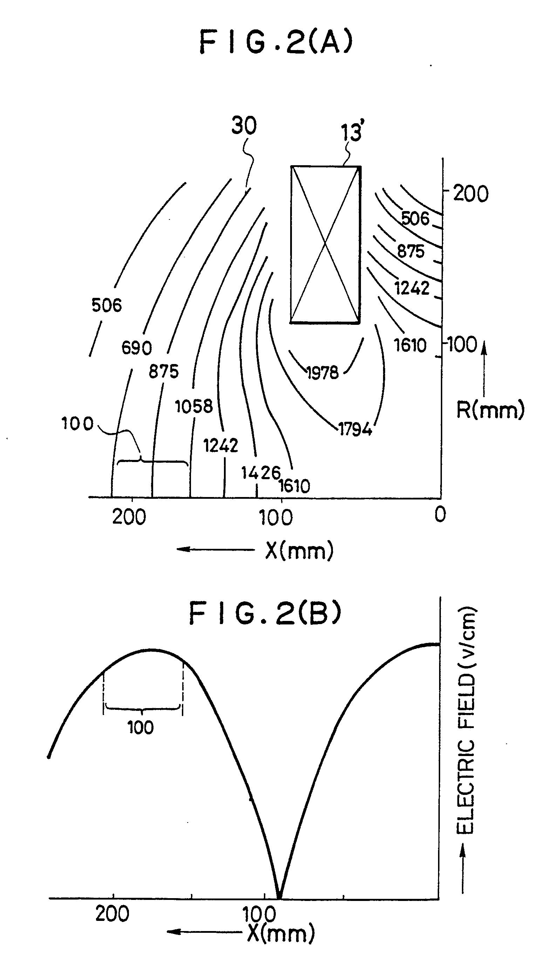

The relationship of the resonance between the plasma reaction and the magnetic field is shown in Figures 2(A) to 3(B).

The strength of the electric field and the magnetic field of a space (50) divided into four sections was investigated and the results are shown in Figure 2(A) and Figure 2(B).

In Figure 2(A), the abscissa (x-axis) is the horizontal direction (direction of the flow of reaction gases) through the space (50). The ordinate axis (R axis) is the radial direction of the electromagnets. The curves of the graph show the uniform levels or contour lines of the magnetic field. The numbers on the curves give the strength of the magnetic field obtained when the electromagnet (13') is about 2000 gauss. When the strength of the electromagnet (13') is adjusted and the resonance space (100) is produced by the 2.45 MHz microwaves having the interaction of the electric and magnetic fields in the range of 875± 175 gauss, the curve (30) indicates the uniform magnetic field which produces this resonance condition at 875 gauss.

The resonance space (100) produced by this resonance condition, as shown in Figure 2(B), is located at an area where the maximum electric field of the microwaves occurs. The abscissa of Figure 2(B), as in Figure 2(A), indicates the direction of the gas flow through the space, while the ordinate axis (vertical axis) inicates the strength of the electric field.

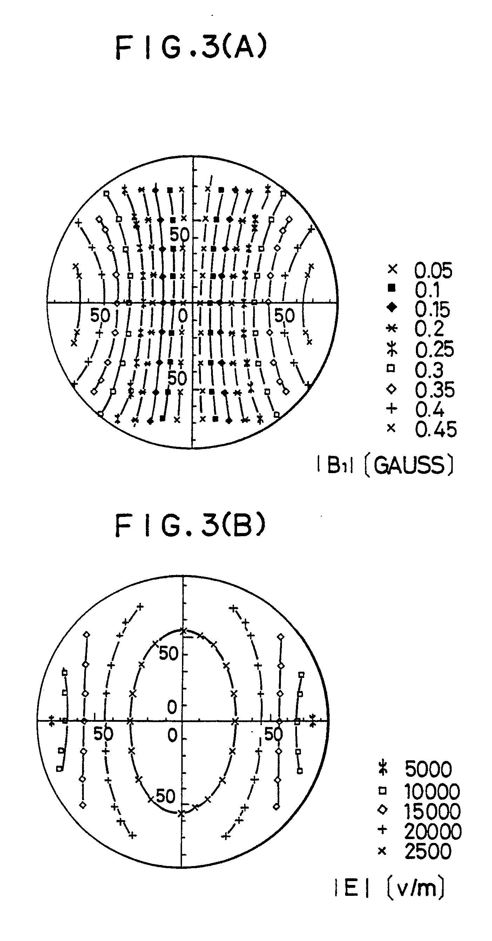

Figure 3(A) is a graph showing surfaces on each of which the strength of the magnetic field is constant and Figure 3(B) is a graph showing surfaces on each of which the strength of the electric field is constant in a circular region around the palladium electrode (2) of Figure 1. It is clear from Figure 3(B) that the maximum electric field reached is 25kV/m. At this strength a high density of deuterium atoms or ions needed for nuclear fusion are collected on the surface or in the vicinity of the surface of the palladium or reaction material. This result means that $D^+$ ions are produced 100 to 10000 times larger than simply in a high frequency electric discharge of 500 kHz to 50 MHz.

EXAMPLE 2

In the equipment of Figure 1, the microwave was used with the frequency between 500 MHz and 50 GHz, for examle at a value of 2.45 GHz, and the electric power was applied between 500 to 50 kW, for example 2 kW. A flow of 20cc/min of deuterium in the form of high purity deuterium gas was made through gas line (9''). The exhaust line was adjusted so that the pressure in the reaction vessel was kept in the range from 0.1 to 7600 Torr, for example a pressure of 760 Torr, in order to produce plasma in the space (21).

It should be noted that this pressure is higher than the 0.001 to 0.01 Torr used by the ECR (electronic cyclotron resonance), and that as a result of this, the density of the deuterium ions is 10 to 10000 times higher.

It is expected that the impact of deuterium ions or atoms reduce and remove any filth from the palladium surface (2) to activate the palladium, and that the following nuclear fusion reaction is then obtainable;

d + d ---> $^3$He(0.82 MeV) + n(2.45 MeV).

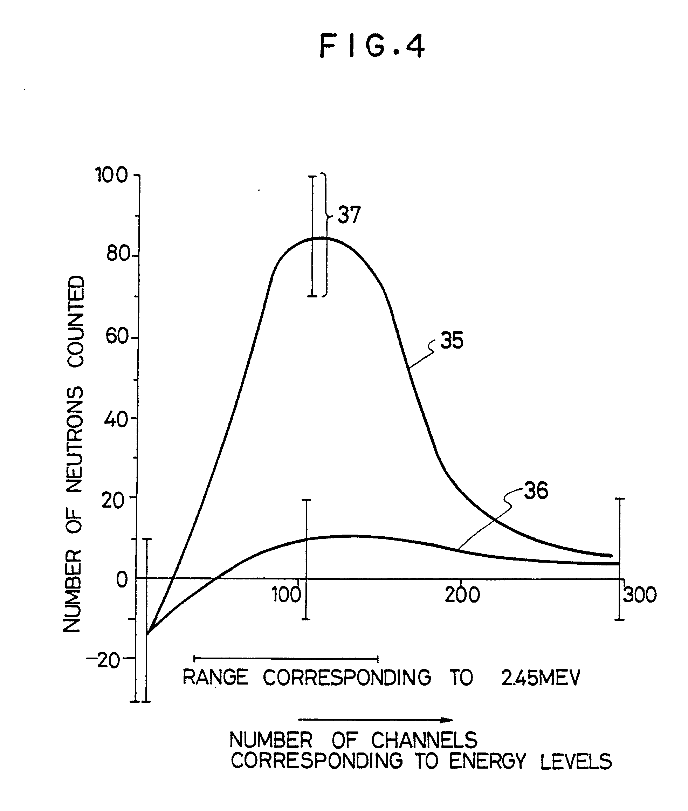

In Figure 4 the abscissa is the number of channels corresponding to the energy and the ordinate axis is the neutron count.

It is concluded after making several measurements that although the variation of width (37) from top to bottom is found to be large, the neutron count in the region corresponding to the neutron energy is apparently increased and so makes it possible to confirm its existence.

In this example, the neutron counter (22) clearly confirmed the existence of neutrons. The existence of this nuclear fusion reaction was also confirmed by the facts that the temperature of the reaction rose and a temperature rise of the water inside the heat transfer vessel (10) was observed.

The water temperature rose from room temperature to nearly 60 °C. When the plasma was maintained, the nuclear fusion reaction stably continued for nearly 500 hours.

In trying to disprove that no nuclear fusion reaction occurs with another substance other than the deuterium, hydrogen ($H_2$) was added by way of line (9'''), as shown in Figure 1, and the plasma reaction was attempted under the same conditions.

When this was done the neutron count was found to be the same as the background level. The curve (36) showing this neutron count is shown in Figure 4. The neutron count (36) obtained under these conditions is apparently different from the count (35) obtained when deuterium was used. This clearly confirms that nuclear fusion has occurred in this example.

EXAMPLE 3

In this example, a high frequency electric power was applied to the pair of electrodes (4) and (5) from a power source (7'), while the microwave power was applied in the same manner as in Examle 2.

When switch (40) of the system in Figure 1 was turned on, a negatively biased direct current was added to a high frequency voltage which was applied to the pair of electrodes. This bias voltage was progressively added from -50 V to -1000 V.

When this was done, the number of collisions of the deuterium ions with the palladium surface was increased due to the direct current bias. As a result, it was easier to produce more deuterium nuclei.

The bias voltage of Figure 1 was increased by bias (7). The bias voltage was controlled by using the variable DC power supply. By so doing, the neutron count at location 100 of Figure 4 increased from the value of 100 in average which occurred when no bias was applied to the range of 400 to nearly 870.

It should be noted that the result of the exterior negative bias is very remarkable.

All of the above examples were merely performed on the laboratory scale. However, by expanding this scale 10 - 1000 times, a nuclear fusion reaction with practical use can now be obtained and the nuclear fusion reaction can be used for some practical application such as a controllable energy source. Therefore, the present invention should have a very large industrial impact.

**Claims**

1. A method of producing plasma nuclear fusion reaction with interaction of both a magnetic field and an electric field, comprising the steps of; defining a plasma generating space for nuclear fusion reaction, keeping the plasma generating space at a predetermined pressure from below atmospheric pressure to above the atmospheric pressure, providing a magnetic field which is made to surround the plasma generating space, providing a means for applying microwaves to the plasma generating space, providing a resonating space in the plasma generating space where a maximum electric field of the microwaves and an interaction of the magnetic and electric fields are experienced, introducing into the resonating space a gas selected from the group of deuterium gas and a deuterium compound gas, whereby the gas is made into plasma, and placing in the resonating space a reactive material for nuclear fusion reaction; wherein the reactive material has a surface with which the gas in plasma is substantially brought into contact to generate a nuclear fusion reaction.

2. The plasma nuclear fusion reaction of Claim 1, wherein a voltage selected from the group of a negative DC voltage and a negative pulse voltage is applied to the reactive material for nuclear fusion reaction to cause the deuterium atoms or ions to collide with the reactive surface.

3. The plasma fusion reaction of Claim 1 wherein the reactive material for uclear fusion reaction is selected from the group of palladium and titanium.

4. The plasma fusion reaction of Claim 1 wherein microwaves have a frequency of 2.45 GHz, and a film forming surface is placed in a space to which a field of 875 gauss is applied.

5. The plasma fusion reaction of Claim 1 wherein the pressure used in creating resonance is 0.1 - 7600 Torr.

6. A method of producing plasma nuclear fusion reaction with interaction of both a magnetic field and an electric field, comprising the steps of; defining a plasma generating space for nuclear fusion reaction, keeping the plasma generating chmaber at a predetermined pressure from below atmospheric pressure to above the atmospheric pressure, providing a magnetic field which is made to surround the plasma generating space; providing a means for applying microwaves to the plasma generating space; providing a resonating space in the plasma generating space where a maximum electric field of the microwaves and an interaction of the magnetic and electric fields are experienced, introducing into the resonating space a gas selected from the group of deuterium gas and a deuterium compound gas, whereby the gas is made into plasma; and placing in the resonating space a reactive material for nuclear fusion reactions wherein the reactive material has a surface to which the gas in plasma is brought close to generate a nuclear fusion reaction.

7. The plasma nuclear fusion reaction of Claim 6, wherein a voltage selected from the group of a negative DC voltage and a negative pulse voltage is applied to the reactive material for nuclear fusion reaction to cause the deuterium atoms or ions to collide with the reactive surface.

8. The plasma fusion reaction of Claim 6, wherein the reactive material for uclear fusion reaction is selected from the group of palladium and titanium.

9. The plasma fusion reaction of Claim 6, wherein microwaves have a frequency of 2.45 GHz, and a film forming surface is placed in a space to which a field of 875 gauss is applied.

10. The plasma fusion reaction of Claim 6, wherein the pressure used in creating resonance is 0.1 - 7600 Torr.

11. A method of obtaining a nuclear fusion reaction comprising the steps of introducing a gas selected from the group of highly pure deuterium and a compound of the highly pure deuterium to a first area where the gas is made into plasma in a resonating place where a maximum electric field of microwaves and an interaction of magnetic and electric fields are expeienced, and introducing the gas in plasma to a second area different from the first area to cause the nuclear fusion reaction with a reactive material selected from palladium and titanium.

# FIG.1

# F I G . 2 (A)

# F I G . 2 (B)

# F I G.3(A)

| | |
|---|---|
| × | 0.05 |
| ■ | 0.1 |
| ◆ | 0.15 |
| ✳ | 0.2 |
| ✳ | 0.25 |
| ▫ | 0.3 |
| ◇ | 0.35 |
| + | 0.4 |
| × | 0.45 |

|B₁| (GAUSS)

# F I G.3(B)

| | |
|---|---|
| ✳ | 5000 |
| ▫ | 10000 |
| ◇ | 15000 |
| + | 20000 |
| × | 2500 |

|E| (v/m)

FIG.4